(19) Europäisches Patentamt
European Patent Office
Office européen des brevets

(11) **EP 2 541 721 A2**

(12) **EUROPEAN PATENT APPLICATION**

(43) Date of publication:
**02.01.2013 Bulletin 2013/01**

(51) Int Cl.:
**H02J 3/34** $^{(2006.01)}$

(21) Application number: **12275046.6**

(22) Date of filing: **13.04.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.06.2011 KR 20110063792**

(71) Applicants:
• **Samsung Electro-Mechanics Co., Ltd**
  **Suwon, Gyunggi-Do (KR)**
• **Industry Foundation Of Chonnam National University**
  **Buk-gu**
  **Gwangju-city (KR)**

(72) Inventors:
• **Heo,, Min Ho**
  **Gyunggi-do Suwon, (KR)**
• **Park,, Sung Jun**
  **Gwangju Buk-gu, (KR)**
• **Lee,, Tae Won**
  **Gyunggi-do Suwon, (KR)**
• **Kim,, Tae Hoon**
  **Gyunggi-do Suwon, (KR)**
• **Lee,, Se Ho**
  **Gyunggi-do Suwon, (KR)**

(74) Representative: **Powell, Timothy John**
  **Potter Clarkson LLP**
  **The Belgrave Centre**
  **Talbot Street**
  **Nottingham NG1 5GG (GB)**

(54) **Grid-connected power conversion device**

(57)     There is provided a grid-connected power conversion device including: one or more DC/DC converters connected to one or more renewable energy sources, respectively; a DC link unit whose voltage value is determined by the sum of currents output from the one or more DC/DC converters; and an inverter unit determining a current command value from the voltage value of the DC link unit, and generating an AC voltage according to the current command value. Since the respective DC/DC converters are available for the MPPT and the modulation index of the inverter are maximized, the efficiency may be improved. Also, since the modulation index can be maximized, a total harmonic distortion may be reduced. In addition, since the inverter can be operated according to the two-phase modulation scheme, harmonic and a switching loss may be reduced.

FIG. 1

**Description**

**CROSS-REFERENCE TO RELATED APPLICATIONS**

This application claims the priority of Korean Patent Application No. 10-2011-0063792 filed on June 29, 2011, in the Korean Intellectual Property Office, the disclosure of which is incorporated herein by reference.

**BACKGROUND OF THE INVENTION**

**Field of the Invention**

The present invention relates to a power conversion device which can be connected to a grid and is capable of providing power from a renewable energy source.

**Description of the Related Art**

Recently, with fears that fossil fuels are in danger of being entirely depleted, people are increasingly interested in renewable energy sources, such as solar power, wind power, a fuel cell, or the like. In particular, it is an important task to connect power produced from such a renewable energy source to an existing power grid. In the grid connection, when conversion power output from a renewable energy source is insufficient compared with demand for load, the power sufficient to make up the power deficit is received from the existing power grid, and when surplus power is output from a renewable energy source, the surplus power is supplied to the existing grid.

Grid-connected power conversion devices according to the related art include a direct current to direct current (DC/DC) converter connected to a renewable energy source and an inverter converting an output from the DC/DC converter into alternating current (AC) power required for the grid. Here, generally, the DC/DC converter is operated in a voltage control mode and the inverter connected to the grid is operated in a current control mode.

However, in grid-connected power conversion devices according to the related art, when a plurality of renewable energy sources are provided, each DC/DC converter is available for maximum power point tracking (MPPT) but cannot increase a modulation index, causing defects in which the inverter may have low efficiency and total harmonic distortion (THD) affecting a different power facility connected to the grid may be high.

**SUMMARY OF THE INVENTION**

An aspect of the present invention provides a grid-connected power conversion device capable of maximizing a modulation index while controlling respective DC/DC converters connected to a renewable energy source with a converter current command value according to maximum power point tracking (MPPT) and controlling an inverter with a current command value generated by using a DC link voltage value as an independent variable.

According to an aspect of the present invention, there is provided a grid-connected power conversion device including: one or more DC/DC converters connected to one or more renewable energy sources, respectively; a DC link unit having a voltage value determined by the sum of currents output from the one or more DC/DC converters; and an inverter unit determining a current command value from the voltage value of the DC link unit, and generating an AC voltage according to the current command value.

The current command value may be determined by a linear function having a DC link voltage value as an independent variable.

The current command value may be generated by a function having the DC link voltage value as the independent variable and determined such that a modulation index of the inverter unit becomes 1.

The current command value may be determined by Equation 1 shown below:

$$I^* = k_1 \times (V_{dc} - k_2)$$

[Equation 1]

Here, $I^*$ may be the current command value, $V_{dc}$ may be a voltage value of the DC link unit, $k_1$ may be determined

by a minimum voltage value of the DC link unit required for a connection to a grid, a voltage value of the DC link unit required for the inverter unit to output a rated maximum output, and a current value of a grid-connected inductor connected to an output terminal of the inverter unit, and $k_2$ may be determined by the minimum voltage value of the DC link unit required for a connection to the grid.

$k_1$ may be determined by Equation 2 shown below, and $k_2$ may be determined by Equation 3 shown below.

[Equation 2]

$$k_1 = \frac{I_{rate}}{V^r_{dc\text{-max}} - V^r_{dc\text{-min}}}$$

[Equation 3]

$$k_2 = V^r_{dc\text{-min}}$$

Here, $I_{rate}$ may be a current value of the grid-connected inductor when the inverter unit outputs the rated maximum output, $V_{dc\text{-min}}$ may be the minimum voltage value of the DC link unit required for a connection to the grid, and $V_{dc\text{-max}}$ may be the voltage value of the DC link unit required for the inverter unit to output the rated maximum output.

$V_{dc\text{-min}}$ may be determined by Equation 4 shown below, and $V_{dc\text{-max}}$ may be determined by Equation 5 shown below:

[Equation 4]

$$V^r_{dc\text{-min}} = k_3 \times V^r_{inv\text{-min}}$$

[Equation 5]

$$V^r_{dc\text{-max}} = k_3 \times V^r_{inv\text{-max}}$$

Here, $V_{inv\text{-min}}$ may be a minimum output voltage value of the inverter unit required for a connection to the grid, $V_{inv\text{-max}}$ may be an output voltage value of the inverter unit when the inverter unit outputs a rated maximum output, and $k_3$ may be a value determined according to the modulation index of the inverter unit.

When the inverter unit is controlled according to a sine wave pulse width modulation (PWM) scheme, it may be

$$k_3 = 2\sqrt{2}.$$

When the inverter unit is controlled according to a space vector modulation scheme, it may be $k_3=\sqrt{6}$.

The one or more DC/DC converters may be controlled by a converter current command value generated through maximum power point tracking (MPPT), respectively.

When a current value is relatively high, the inverter unit may use a two-phase modulation scheme from which switching is omitted.

The AC voltage may be a value determined for a connection to the grid.

The inverter unit may include: a three-phase inverter; and a controller generating the current command value and controlling switching of the three-phase inverter by a PWM signal determined according to the current command value.

The renewable energy sources may include a solar cell.

The DC link unit may include a detachable capacitor.

**BRIEF DESCRIPTION OF THE DRAWINGS**

The above and other aspects, features and other advantages of the present invention will be more clearly understood from the following detailed description taken in conjunction with the accompanying drawings, in which:

FIG. 1 is a schematic block diagram of a grid-connected power conversion device according to an embodiment of the present invention;

FIG. 2A is a single-phase equivalent circuit diagram of an inverter unit according to an embodiment of the present invention;

FIG. 2B is a phasor diagram according to an embodiment of the present invention;

FIG. 3 is a graph for explaining a relationship between a DC link unit voltage and an inverter unit output voltage for determining a modulation index of the inverter unit according to an embodiment of the present invention;

FIG. 4 is a graph for determining a current command value of the inverter unit according to an embodiment of the present invention;

FIG. 5 is a waveform view showing an abnormal modulation according to an embodiment of the present invention; and

FIG. 6 is a simulation waveform view according to an embodiment of the present invention.

**DETAILED DESCRIPTION OF THE INVENTION**

Embodiments of the present invention will now be described in detail with reference to the accompanying drawings.

In describing the present invention, terms indicating the constituents of the present invention are named in consideration of functions of the respective constituents, such that they should not be interpreted as limiting the technical constituents of the present invention.

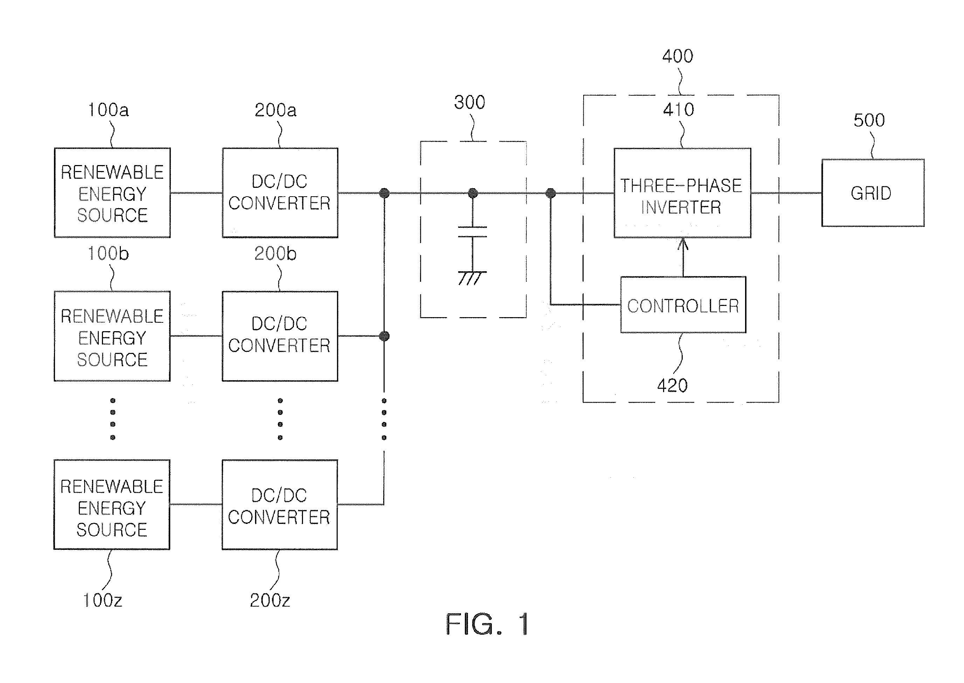

FIG. 1 is a schematic block diagram of a grid-connected power conversion device according to an embodiment of the present invention.

With reference to FIG. 1, the grid-connected power conversion device according to an embodiment of the present invention may include one or more DC/DC converters 200a to 200z connected to one or more renewable energy sources 100a to 100z, a DC link unit 300 whose voltage value is determined by the sum of currents output from the one or more DC/DC converters 200a to 200z, and an inverter unit 400 determining a current command value ($I^*$) from the voltage value of the DC link unit 300, and generating an AC voltage according to the current command value ($I^*$).

The one or more renewable energy sources 100a to 100z may be individual solar cells which are separately disposed. Alternatively, the renewable energy sources 100a to 100z may be a combined form of a solar cell and a fuel cell, respectively.

The DC/DC converters 200a to 200z connected to the renewable energy sources 100a to 100z, respectively, may convert a DC voltage/current from the renewable energy sources 100a to 100z into a different level of DC voltage/current. Here, switching of the respective DC/DC converters 200a to 200z may be separately controlled by a converter current command value generated according to maximum power point tracking (MPPT).

The DC link unit 300 may include a capacitor charged by the sum of DC currents output from the one or more DC/DC converters 200a to 200z. Here, the capacitor may be a detachable capacitor. When a detachable capacitor is in use, determining of the entire life span of the power conversion device by a life span of the capacitor can be prevented.

The inverter unit 400 may generate an AC voltage which can be connected to a grid 500. Here, the inverter unit 400 may include a three-phase inverter 410. Also, the inverter unit 400 may include a controller 420 generating an AC current command value ($I^*$) required for a connection to the grid 500 from the voltage of the DC link unit 300, and controlling switching of the three-phase inverter 410 by a pulse width modulation (PWM) signal determined according to the generated current command value ($I^*$). Here, in order to generate the PWM signal, a sine wave PWM scheme or a space vector modulation scheme may be used.

The inverter unit 400 may generate the current command value ($I^*$) which can always bring a modulation index from the voltage of the DC link unit 300 as 1, and hereinafter, a process of determining such a current command value ($I^*$) will be described in detail with reference to FIGS. 1 through 4. Values used herein may be virtual (or effective) values.

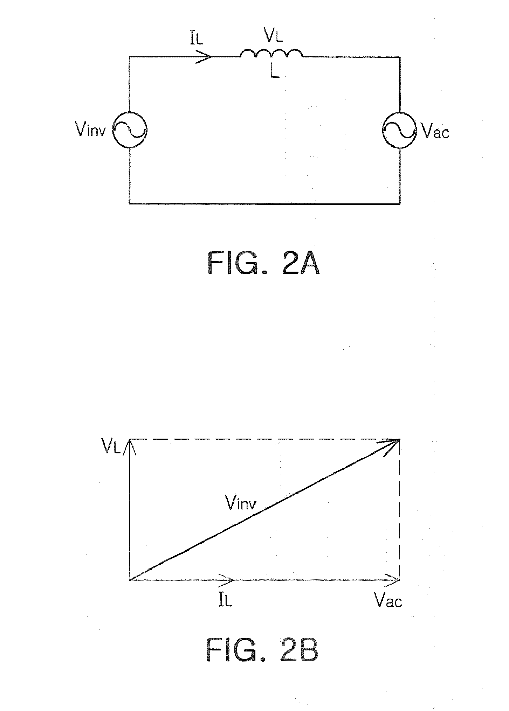

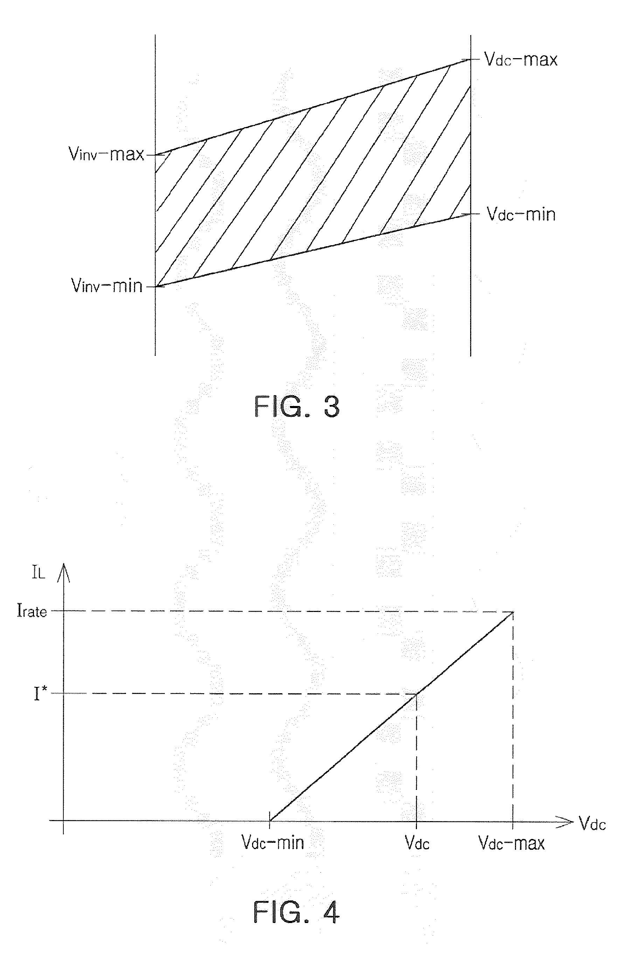

FIG. 2A is a single-phase equivalent circuit diagram of the inverter unit 400 according to an embodiment of the present invention, and FIG. 2B is a phasor diagram according to an embodiment of the present invention. FIG. 3 is a graph for explaining a relationship between a DC link unit voltage and an inverter unit output voltage for determining a modulation index of the inverter unit according to an embodiment of the present invention. FIG. 4 is a graph for determining the current command value ($I^*$) of the inverter unit 400 according to an embodiment of the present invention.

With reference to FIG. 2A, $V_{inv}$ is a voltage output from a phase of the three-phase inverter 410, $V_{ac}$ is a voltage required for the grid 500, $L$ is a grid-connected inductor, $V_L$ is a voltage of the grid-connected inductor, and $I_L$ is a current flowing across the grid-connected inductor.

The inductor ($L$) may adjust the phase, magnitude, or the like, of power generated in the inverter in order to connect the grid-connected power conversion device to the grid 500.

With reference to FIG. 2B, the three-phase inverter 410 may output a voltage corresponding to the sum of the voltage ($V_{ac}$) required for the grid 500 and the voltage ($V_L$) of the grid-connected inductor which is ahead by 90 degrees thereof.

Accordingly, the following relational expression can be established.

$$V_{inv} = \sqrt{V_{ac}^2 + V_L^2} \qquad \cdots\cdots (1)$$

Here, since

$$V_{L\text{-max}} = wLI_{rate}, \qquad \cdots\cdots (2)$$

$$V_{inv\text{-max}} = \sqrt{V_{ac}^2 + (wLI_{rate})^2} \qquad \cdots\cdots (3)$$

$$V_{inv\text{-min}} = V_{ac} \qquad \cdots\cdots (4)$$

can be established.

Here, $V_{inv\text{-max}}$ is an output voltage value of the inverter when the inverter outputs a rated maximum output, $V_{inv\text{-min}}$ is a minimum output voltage value of the inverter required for a connection to the grid 500. In other words, in order for the grid-connected power conversion device to be connected to the grid 500 and operate at a rated area, a voltage value between $V_{inv\text{-min}}$ and $V_{inv\text{-max}}$ should be output.

Meanwhile, with reference to FIG. 3, a relationship between $V_{inv}$ and $V_{dc}$ according to a modulation index can be known. The shaded area in FIG. 3 is the rated area of the inverter. $V_{dc\text{-max}}$ is a minimum voltage value of the DC link unit 300 required for the inverter to output the rated maximum output, and $V_{dc\text{-min}}$ is a voltage value of the DC link unit 300 required for a connection to the grid 500.

In FIG. 3, in order for the inverter to output a voltage between $V_{inv\text{-min}}$ and $V_{inv\text{-max}}$ the voltage of the capacitor of the DC link unit 300 is required to have a voltage between $V_{dc\text{-min}}$ and $V_{dc\text{-max}}$, and this correspondence relationship is determined according to the modulation index.

The relationship may be expressed as follows.

$$V^r_{dc\text{-min}} = k_3 \times V^r_{inv\text{-min}} \qquad \cdots\cdots (5)$$

$$V^r_{dc\text{-max}} = k_3 \times V^r_{inv\text{-max}} \qquad \cdots\cdots (6)$$

Here, $k_3$ is a coefficient determined according to the modulation index and a PWM signal generation scheme. When a modulation scheme is a sine wave PWM scheme and the modulation index is set to be 1, it may become $k_3=2\sqrt{2}$ Meanwhile, a space vector pulse width modulation (SVPWM) scheme is generally known to have 12.1% higher efficiency than that of the sine wave PWM scheme. Thus, when a modulation scheme is the SVPWM scheme and the modulation index is set to be 1, it may be $k_3=\sqrt{6}$

With reference to FIG. 4, a current command value ($I^*$) of 0 may be formed at $V_{dc\text{-min}}$, and a maximum value $I_{rate}$ of the current command value ($I^*$) may be formed at $V_{dc\text{-max}}$. The relationship between the current command value ($I^*$) and $V_{dc}$ can be expressed as a linear function and its relational expression is as follows.

$$I^* = k_1 \times (V^r_{dc} - k_2) \qquad \cdots\cdots (7)$$

Here,

$$k_1 = \frac{I_{rate}}{V^r_{dc\text{-max}} - V^r_{dc\text{-min}}} \qquad \cdots\cdots (8)$$

$$k_2 = V^r_{dc\text{-min}} \qquad \cdots\cdots (9)$$

Also, since $V_{dc\text{-min}}$ and $V_{dc\text{-max}}$ are expressed by Equation 5 and Equation 6 shown above, respectively, Equation 8 and Equation 9 shown above may be expressed by Equation 10 and Equation 11 shown below, respectively:

$$k_1 = \frac{I_{rate}}{k_3 \times (V^r_{inv\text{-max}} - V^r_{inv\text{-min}})} \qquad \cdots\cdots (10)$$

$$k_2 = k_3 \times V^r_{inv\text{-min}} \qquad \cdots\cdots (11)$$

Here, when the modulation index is 1 and the modulation scheme is the sine wave PWM scheme, Equation 10 and Equation 11 may be expressed by Equation 12 and Equation 13 shown below, respectively:

$$k_1 = \frac{I_{rate}}{2\sqrt{2} \times (V^r_{inv\text{-}max} - V^r_{inv\text{-}min})} \qquad \cdots\cdots (12)$$

$$k_2 = 2\sqrt{2} \times V^r_{inv\text{-}min} \qquad \cdots\cdots (13)$$

When the modulation index is 1 and the modulation scheme is the SVPWM scheme, Equation 10 and Equation 11 may be expressed by Equation 14 and Equation 15 shown below, respectively:

$$k_1 = \frac{I_{rate}}{\sqrt{6} \times (V^r_{inv\text{-}max} - V^r_{inv\text{-}min})} \qquad \cdots\cdots (14)$$

$$k_2 = \sqrt{6} \times V^r_{inv\text{-}min} \qquad \cdots\cdots (15)$$

In Equation 10 to Equation 15, $V_{inv\text{-}max}$ and $V_{inv\text{-}min}$ may be those in Equation 3 and Equation 4, respectively, and $V_{ac}$, $W$, $L$, and $I_{rate}$ may be predetermined values such as the rated value of the inverter, or the like.

$$V^r_{inv\text{-}max} = \sqrt{V^r_{ac}{}^2 + (wLI_{rate})^2} \qquad \cdots\cdots (3)$$

$$V^r_{inv\text{-}min} = V^r_{ac} \qquad \cdots\cdots (4)$$

To sum up, the controller 420 of the inverter unit 400 according to an embodiment of the present invention may generate the current command value ($I^*$) by the linear function having the voltage of the DC link unit 300 as an independent variable while allowing the modulation index to have 1.

Also, since the one or more DC/DC converters 200a to 200z are controlled through the MPPT, respectively, and the inverter unit 400 is controlled by the current command value ($I^*$) generated according to the DC link voltage under the condition in which the modulation index has a maximum value, the voltage utilization of the inverter unit 400 can be significantly increased.

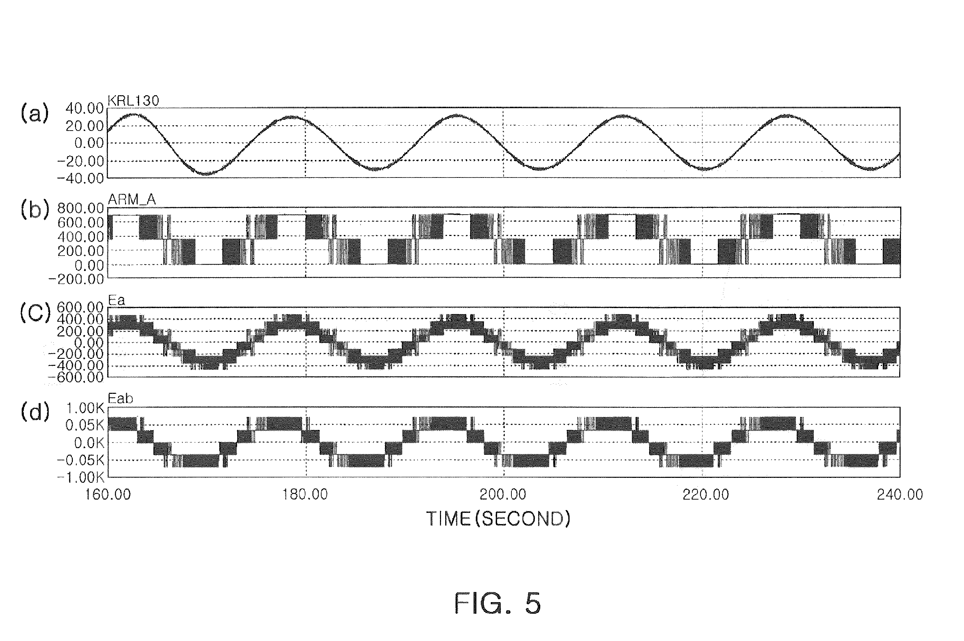

Also, since the modulation index can be maximized, a switching signal can be generated according to a two-phase modulation scheme. This will now be described with reference to FIG. 5.

With reference to FIG. 5, FIG. 5A shows a phase current, FIG. 5B shows a PWM signal generated according to the sine wave scheme, FIG. 5C shows a phase voltage, and FIG. 5D shows a line voltage.

As shown in FIG. 5B, the PWM signal follows a two-phase modulation scheme in which switching is performed during a 120° section and switching is not performed in a subsequent 60° section. With reference to FIG. 5A, it is noted that the current value is before and after a peak value during the section in which switching is not performed. Thus, a switching loss and a harmonic component may be considerably reduced by employing the two-phase modulation scheme.

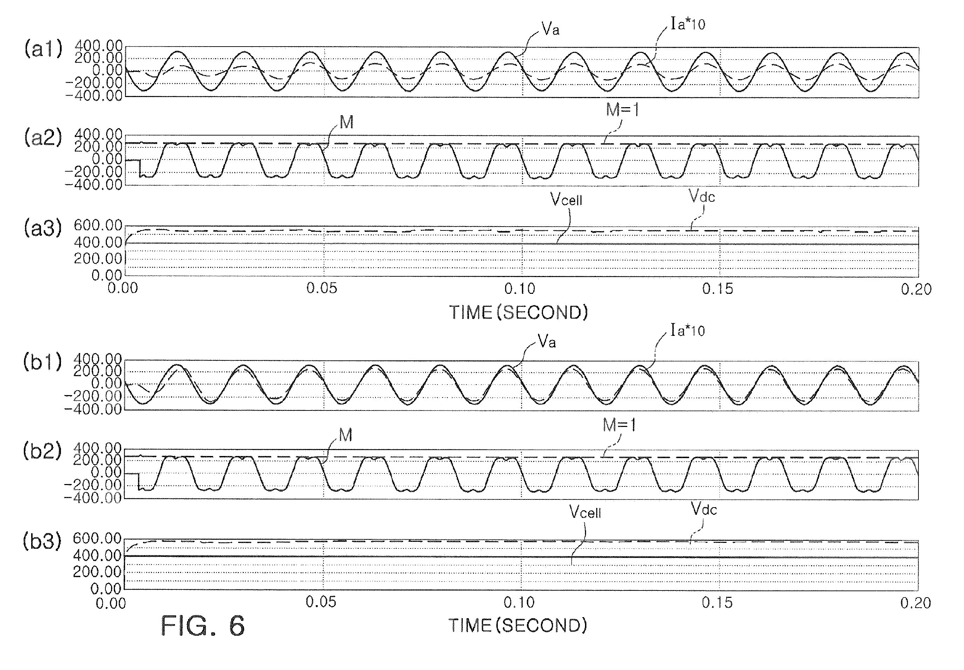

FIG. 6 is a waveform view showing simulation results according to an embodiment of the present invention. In FIG. 6, (a1) to (a3) were obtained by modeling the use of three 2kW-level rated DC/DC converters 200a to 200z and one 6kW-level rated inverter. In FIG. 6, (b1) to (b3) were obtained by modeling the use of three 4kW-level rated DC/DC converters 200a to 200z and one 12kW-level rated inverter.

It is noted that, although the voltages of the DC link unit 300 are different in FIG. 6(a3) and FIG. 6(b3), the modulation index is always 1 as shown in FIG. 6(a2) and FIG. 6(b2).

As set forth above, according to embodiments of the invention, because the respective DC/DC converters are available for the MPPT and the modulation index of the inverter is maximized, the efficiency may be improved. Also, because the modulation index may be maximized, a total harmonic distortion may be reduced. In addition, because the inverter may be operated according to the two-phase modulation scheme, harmonic and a switching loss may be reduced.

While the present invention has been shown and described in connection with the embodiments, it will be apparent to those skilled in the art that modifications and variations can be made without departing from the spirit and scope of the invention as defined by the appended claims.

**Claims**

1. A grid-connected power conversion device comprising:

   one or more direct current to direct current (DC/DC) converters connected to one or more renewable energy sources, respectively;
   a DC link unit having a voltage value determined by the sum of currents output from the one or more DC/DC converters; and
   an inverter unit determining a current command value from the voltage value of the DC link unit, and generating an alternating current (AC) voltage according to the current command value.

2. The grid-connected power conversion device of claim 1, wherein the current command value is determined by a linear function having a DC link voltage value as an independent variable.

3. The grid-connected power conversion device of claim 1, wherein the current command value is generated by a function having the DC link voltage value as the independent variable and determined such that a modulation index of the inverter unit becomes 1.

4. The grid-connected power conversion device of claim 1, wherein the current command value is determined by Equation 1 shown below:

[Equation 1]

$$I^* = k_1 \times (V_{dc} - k_2)$$

wherein $I^*$ is a current command value, $V_{dc}$ is a voltage value of the DC link unit, $k_1$ is determined by a minimum voltage value of the DC link unit required for a connection to a grid, a voltage value of the DC link unit required for the inverter unit to output a rated maximum output, and a current value of a grid-connected inductor connected to an output terminal of the inverter unit, and $k_2$ is determined by the minimum voltage value of the DC link unit required for a connection to the grid.

5. The grid-connected power conversion device of claim 4, wherein $k_1$ is determined by Equation 2 shown below, and $k_2$ is determined by Equation 3 shown below.

[Equation 2]

$$k_1 = \frac{I_{rate}}{V^r_{dc\text{-max}} - V^r_{dc\text{-min}}}$$

[Equation 3]

$$k_2 = V^r_{dc\text{-min}}$$

wherein $I_{rate}$ is a current value of the grid-connected inductor when the inverter unit outputs the rated maximum output, $V_{dc\text{-min}}$ is the minimum voltage value of the DC link unit required for a connection to the grid, and $V_{dc\text{-max}}$ is the voltage value of the DC link unit required for the inverter unit to output the rated maximum output.

6. The grid-connected power conversion device of claim 5, wherein $V_{dc\text{-min}}$ is determined by Equation 4 shown below, and $V_{dc\text{-max}}$ is determined by Equation 5 shown below:

[Equation 4]

$$V^r_{dc\text{-min}} = k_3 \times V^r_{inv\text{-min}}$$

[Equation 5]

$$V^r_{dc\text{-max}} = k_3 \times V^r_{inv\text{-max}}$$

wherein $V_{inv\text{-min}}$ is a minimum output voltage value of the inverter unit required for a connection to the grid, $V_{inv\text{-max}}$ is an output voltage value of the inverter unit when the inverter unit outputs a rated maximum output, and $k_3$ is a value determined according to the modulation index of the inverter unit.

7. The grid-connected power conversion device of claim 6, wherein when the inverter unit is controlled according to a sine wave pulse width modulation (PWM) scheme, it becomes $k_3=2\sqrt{2}$.

8. The grid-connected power conversion device of claim 6, wherein when the inverter unit is controlled according to a space vector modulation scheme, $k_3=\sqrt{6}$.

9. The grid-connected power conversion device of claim 1, wherein the one or more DC/DC converters are controlled by a converter current command value generated through maximum power point tracking (MPPT), respectively.

10. The grid-connected power conversion device of claim 1, wherein when a current value is relatively high, the inverter unit uses a two-phase modulation scheme from which switching is omitted.

11. The grid-connected power conversion device of claim 1, wherein the AC voltage is a value determined for a connection to the grid.

12. The grid-connected power conversion device of claim 1, wherein the inverter unit includes:

    a three-phase inverter; and

a controller generating the current command value and controlling switching of the three-phase inverter by a PWM signal determined according to the current command value.

13. The grid-connected power conversion device of claim 1, wherein the renewable energy sources include a solar cell.

14. The grid-connected power conversion device of claim 1, wherein the DC link unit includes a detachable capacitor.

FIG. 1

FIG. 2A

FIG. 2B

FIG. 3

FIG. 4

FIG. 5

FIG. 6

**EP 2 541 721 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020110063792